# FASCICULE DE BREVET EUROPEEN

(11) **EP 3 391 437 B1**
(45) Date de publication et mention de la délivrance du brevet: **05.01.2022**
(21) Numéro de dépôt: 16805867.5
(22) Date de dépôt: 06.12.2016
(51) Int. Cl.: H01M 4/04, H01M 4/58, H01M 4/66

(54) **ELECTRODE EN HALOGÉNURE DE MÉTAL AUTO-FORMÉE ET PROCÉDÉ DE FABRICATION ASSOCIÉ**
SELBSTFORMENDE METALLHALOGENIDELEKTRODE UND ZUGEHÖRIGES HERSTELLUNGSVERFAHREN
SELF-FORMING METAL HALIDE ELECTRODE, AND ASSOCIATED PRODUCTION METHOD

(30) Priorité: 17.12.2015 FR 1562716
(43) Date de publication de la demande: 24.10.2018
(73) Titulaire: Electricité de France, 75008 Paris (FR)
(72) Inventeur: VIDAL, Elodie, 77690 Montigny Sur Loing (FR); RIBEAUCOURT, Lydie, 77210 Avon (FR); NOVOA, Ramon X., 36211 Vigo (ES); GUITIAN, Beatriz, 36440 As Neves (ES)
(74) Mandataire: Plasseraud IP
(86) Numéro de dépôt international: PCT/EP2016/079851
(87) Numéro de publication internationale: WO 2017/102427

(56) Documents cités:
- US-A1- 2015 180 039
- GUITIÁN B ET AL: "On the growth of nanostructured iron hydroxy-fluorides for Li-ion batteries", JOURNAL OF POWER SOURCES, vol. 241, 15 mai 2013 (2013-05-15), pages 567-571, XP028675821, ISSN: 0378-7753, DOI: 10.1016/J.JPOWSOUR.2013.04.145
- WENDY FREDRIKSSON ET AL: "XPS study of duplex stainless steel as a possible current collector in a Li-ion battery", ELECTROCHIMICA ACTA., vol. 79, 4 juillet 2012 (2012-07-04), pages 82-94, XP055265477, GB ISSN: 0013-4686, DOI: 10.1016/j.electacta.2012.06.057

## Description

### DOMAINE TECHNIQUE

L'invention se rapporte au domaine des dispositifs électrochimiques à ion de métal alcalin, notamment les dispositifs de type lithium-ion ou sodium-ion, tels que les accumulateurs ou les batteries. Plus particulièrement, l'invention se rapporte aux électrodes positives de ces dispositifs, et leur procédé de fabrication.

### ARRIÈRE-PLAN TECHNOLOGIQUE

La technologie des batteries à ion de métal alcalin, parmi lesquelles figurent notamment les batteries lithium-ion ou sodium-ion, suscite aujourd'hui un grand intérêt de par ses performances élevées et supérieures à la plupart des autres technologies de batteries actuelles. Toutefois, malgré son potentiel pour le stockage d'énergie, l'utilisation des dispositifs électrochimiques à ion de métal alcalin commercialisés à ce jour reste limitée du fait notamment de leur densité d'énergie insuffisante et de leur coût jugé trop élevé.

La densité d'énergie des batteries à ion de métal alcalin est plus particulièrement limitée par les performances de son électrode positive. Parmi les batteries à ion de métal alcalin les plus répandues figurent les batteries de type lithium-ion.

Les technologies lithium-ion existantes reposent sur l'utilisation d'une électrode positive comprenant un matériau réagissant électrochimiquement de façon réversible avec le lithium. Le matériau réagissant électrochimiquement de façon réversible avec le lithium est généralement un matériau d'insertion, c'est-à-dire une structure hôte dans laquelle des ions lithium sont insérés en cours de réaction. Typiquement, l'électrode positive d'une batterie lithium-ion est fabriquée à base d'oxydes de métaux de transition, comme par exemple l'oxyde de cobalt lithié LiCoO₂, très largement utilisé notamment dans les dispositifs portatifs, ou encore l'oxyde de manganèse lithié LiMn₂O₄.

Un autre type de matériau réagissant électrochimiquement avec le lithium est aussi étudié : les matériaux à conversion. Dans ces électrodes à matériaux à conversion, les ions lithium réagissent selon la réaction suivante :

nLi⁺ + Meⁿ⁺X + ne⁻ <=> LiₙX + Me⁰

où Me représente un métal de transition et X est un élément qui peut être du fluor, du soufre, de l'oxygène, du phosphore ou de l'azote par exemple. L'avantage de ces réactions par rapport aux réactions d'insertion est que le nombre de moles d'électrons (n) mises en jeu par mole de métal de transition (Me) est en général égal ou supérieur à 2, ce qui est très élevé par rapport au cas des matériaux d'insertion : -0,5 pour LiCoO₂. Cette caractéristique confère un potentiel énergétique important aux réactions de conversion.

Parmi les matériaux à conversion les plus prometteurs figurent les halogénures de métal, et plus particulièrement les fluorures de métal. Les fluorures de métal présentent en effet une capacité théorique élevée qui permettrait en principe d'améliorer considérablement la densité d'énergie d'une batterie lithium-ion. À titre d'exemple, le fluorure de fer FeF3 présente une capacité théorique de 237 Ah•kg⁻¹ à un potentiel de 2,7 V (cas d'une réaction par transfert d'une mole d'électrons, ou réaction d'insertion des ions lithium), ou encore 712 Ah•kg⁻¹ à un potentiel de 1,5 V (cas d'une réaction par transfert de trois moles d'électrons, ou conversion en Fe⁰). Le fluorure de fer FeF3 permettrait ainsi d'atteindre en principe une densité d'énergie théorique de 640 Wh•kg⁻¹ ou 1068 Wh•kg⁻¹ respectivement. Ces valeurs sont plus élevées que celles qui peuvent être atteintes avec des électrodes classiques ; par exemple, le matériau LiCoO₂ couramment utilisé présente une capacité théorique de 150Ah•kg⁻¹ à un potentiel de 4V, soit 600Wh•kg⁻¹. La densité d'énergie théorique accessible au moyen d'une électrode positive comprenant un fluorure de métal peut ainsi être 180% plus élevée qu'avec d'autres types d'électrodes connues couramment employées dans les batteries lithium-ion.

Lors de la première décharge d'une batterie lithium-ion incluant une électrode comprenant du fluorure de fer, le FeF3 se réduit électrochimiquement avec les ions lithium pour former un nano composite qui est constitué de nano domaines de Fe incrustés dans une matrice de LiF. Lors des phases suivantes de charge et décharge de la batterie, la composition du nano composite évoluera de façon réversible, avec formation du fluorure de fer en charge et formation de fer métallique en décharge, selon l'équation suivante:

FeF₃ + 3Li⁺ + 3e⁻ <=> 3 LiF + Fe⁰

Le changement de structure engendré par cette réaction occasionne d'importantes variations de volume et crée des contraintes mécaniques qui peuvent à terme entrainer une décohésion de la matière active. Pour remédier à ces défauts, des électrodes composites comprenant des nano-poudres sont utilisés. Ces électrodes composites sont typiquement constituées d'une poudre de matière active (c'est-à-dire, une poudre de fluorure de métal) mélangée à un polymère liant et à une poudre de matériau conducteur électrique. Le problème de la décohésion peut en outre être partiellement résolu en diminuant le diamètre des particules de poudre de fluorure de métal.

Un inconvénient des électrodes composites à base de fluorure de métal réside dans le fait que leur fabrication implique plusieurs étapes et reste complexe. Leur fabrication se fait en plusieurs étapes impliquant la synthèse des composés, le mélangeage, l'épandage sur un collecteur de courant, le calandrage et le séchage. Il est par conséquent recherché un procédé de fabrication plus simple et moins coûteux en temps, coûts et énergie pour fabriquer une électrode positive d'un dispositif électrochimique lithium-ion.

L'article « On the growth of nanostructured iron hydroxy-fluorides for Li-ion batteries » de Guitiân B. et al. JOURNAL OF POWER SOURCES, vol. 241, (2013-05-12) pages 567-571, ISSN: 0378-7753, propose une approche différente pour fabriquer une électrode positive à base de fluorure de métal. Au lieu d'utiliser un polymère liant et des particules nanométriques de la matière active (le fluorure de métal), cet article propose de faire croître par un traitement électrochimique tel qu'une anodisation, une couche de fluorure de métal directement sur un collecteur de courant. Bien que ce procédé de fabrication soit simplifié par rapport aux méthodes de l'art antérieur, il implique néanmoins le recours à l'application d'une tension électrique pendant l'étape de synthèse de la couche de fluorure de métal et est effectué avant l'assemblage du dispositif électrochimique (batterie secondaire dite rechargeable ou batterie primaire, dite pile non rechargeable), destiné à accueillir l'électrode.

L'article « XPS study of duplex stainless steel as a possible current collector in a Li-ion battery » de Wendy Fredriksson et al. ELECTROCHIMICA ACTA., vol. 79, (2012-09-01), pages 82-94, ISSN: 0013-4686, décrit une étude de la propriété de corrosion d'un acier duplex LDX 2101 dans une batterie Li-ion avec un électrolyte constitué d'hexafluorophosphate de lithium (LiPF6) 1 M dans un mélange 1:1 de carbonate d'éthylène et de carbonate de diméthyle (EC / DMC). Ce document démontre que le niveau de corrosion de cet acier duplex est acceptable à des potentiels élevés mais trop réactif à des potentiels faibles.

Il est par conséquent recherché un procédé de fabrication d'une électrode positive à base de fluorure de métal qui soit plus simple et plus économe que les procédés de l'art antérieur.

### EXPOSE DE L'INVENTION

Pour répondre aux problèmes exposés ci-avant, la présente invention propose un procédé de fabrication d'une électrode positive destinée à être utilisée dans un dispositif électrochimique à ion de métal alcalin, comprenant :
- synthétiser une couche d'un halogénure de métal par traitement électrochimique d'un collecteur de courant.

Ce procédé a pour particularité que le traitement électrochimique est une corrosion spontanée du collecteur de courant.

En proposant une corrosion spontanée du collecteur de courant pour déposer une couche d'un halogénure de métal en vue de constituer une électrode positive, l'invention simplifie considérablement le procédé de fabrication d'une électrode positive pour dispositif à ion de métal alcalin. Notamment, contrairement aux procédés existants qui supposent au moins l'application d'une tension électrique pour effectuer un électro-dépôt par anodisation, ou bien qui impliquent plusieurs étapes complexes et successives pour fabriquer une électrode composite, l'invention propose un procédé simple en une seule étape.

Du fait de sa simplicité, et de la possibilité offerte par le procédé objet de la présente invention de n'appliquer aucune énergie électrique supplémentaire pour synthétiser une couche d'un halogénure de métal, ce procédé peut être mis en œuvre directement dans un dispositif électrochimique déjà assemblé.

La couche d'halogénure de métal étant un élément de l'électrode positive (matière active de la cathode) avec le collecteur de courant, sa fabrication est ainsi réalisée juste avant la première utilisation de la batterie en un temps limité. L'avantage offert par cette flexibilité réside notamment dans le fait que le dispositif électrochimique peut être stocké sans électrolyte avant la fabrication ultime de cette couche d'halogénure de métal. Ceci évite toute dégradation du dispositif avant stockage et tout risque d'auto-décharge.

Un autre avantage du procédé de l'invention réside dans le fait que la synthèse de la couche d'halogénure de métal n'est pas polluée par des contaminants présents dans l'air. Comme le tout est effectué par corrosion, qui peut avoir lieu dans le dispositif lui-même, il n'est pas nécessaire de prévoir une étape supplémentaire de traitement thermique sous vide pour obtenir une atmosphère contrôlée. La couche d'halogénure de métal est ainsi naturellement pure, dépourvue de contaminants.

Le procédé e comprend :
- dissoudre un précurseur d'ions halogénure dans une solution liquide en contact avec le collecteur de courant.

La corrosion spontanée s'effectue au moyen de la mise en contact avec un métal du collecteur de courant d'un précurseur d'ions halogénure. Le pouvoir oxydant du précurseur d'ions halogénure est supérieur au pouvoir oxydant du métal du collecteur de courant. Le tout se produit dans une solution liquide pour une plus grande simplicité de mise en œuvre.

La solution liquide est un solvant organique.

Les solvants organiques peuvent ainsi être des solvants organiques anhydres couramment utilisés dans les dispositifs électrochimiques à ion de métal alcalin tels que les batteries. Il s'agit généralement de mélanges en proportions variables d'alkyles carbonates. On peut par exemple citer le solvant EC:DEC 1 :1 (carbonate d'éthylène: carbonate de diéthyle) couramment utilisé dans les électrolytes de batteries lithium-ion comme solvant. D'autres solvants sont aussi envisageables (carbonate de propylène, carbonate de diméthyle,...).

La solution liquide est un électrolyte liquide du dispositif électrochimique à ion de métal alcalin comprenant un sel du métal alcalin inerte chimiquement par rapport au collecteur de courant et assurant la conduction ionique de l'électrolyte.

La corrosion spontanée est effectuée dans le dispositif électrochimique à ion de métal alcalin une fois ledit dispositif électrochimique à ion de métal alcalin assemblé.

Ceci permet d'éviter d'avoir à stocker un dispositif électrochimique comprenant déjà un électrolyte, et évite toute dégradation ou auto-décharge du dispositif avant sa première utilisation. La couche d'halogénure de métal n'est fabriquée que juste avant la première utilisation du dispositif électrochimique à ion de métal alcalin. Par ailleurs, comme évoqué ci-avant, ceci permet d'avoir une couche d'halogénure de métal pure, sans étape supplémentaire de traitement thermique sous vide pour effectuer la synthèse sous atmosphère contrôlée.

Selon un mode de réalisation, le sel de de métal alcalin inerte chimiquement par rapport au collecteur de courant peut être choisi parmi le groupe constitué de : LiBF4, LiCF₃SO₃, LiN(C₂F₅SO₂)₂, LiN(CF₃SO₂)₂ (LITFSI), LiC(SO₂CF₃)₃ (LiTf), LiBOB (Lithium Bis-Oxalate Borate de Lithium), NaN(CF₃SO₂)₂(NaTFSI).

Selon un mode de réalisation, le précurseur d'ions fluorure peut être un sel choisi parmi le groupe constitué de : LiPF₆, NaPF₆, LiAsF₆, LiSbF₆.

Les sels de métal alcalin et les précurseurs d'ions halogénures mentionnés ci-avant sont simples à utiliser et sont faciles d'accès car ils sont couramment utilisés dans les électrolytes de batteries.

Selon un mode de réalisation, le collecteur de courant peut comprendre du fer, pur ou intégré à un alliage, en contact avec la solution liquide.

Le fer à l'état pur ou en alliage, par exemple dans un acier, est un métal particulièrement intéressant pour fabriquer une couche d'halogénure de fer, et notamment de fluorure de fer possédant une capacité massique théorique élevée.

Selon un mode de réalisation, le procédé peut en outre comprendre :
- effectuer la corrosion spontanée du collecteur de courant pendant au moins 48 heures, la concentration en précurseur d'ions halogénure étant comprise entre 1 mmol/L et 1 mol/L dans la solution liquide.

Une corrosion spontanée avec une telle concentration en précurseur d'ions halogénure dans la solution liquide peut permettre typiquement d'obtenir des couches d'une épaisseur comprise entre 10 nm et 100 µm, et plus particulièrement une épaisseur comprise entre 0,1 µm et 100 µm.

Une durée de 48 heures permet d'obtenir par corrosion spontanée une couche d'halogénure de métal ayant une épaisseur suffisante pour constituer une électrode positive de dispositif électrochimique à ion de métal alcalin opérationnelle.

Selon un mode de réalisation, le procédé peut en outre comprendre :
- appliquer un courant ou une tension au dispositif électrochimique à ion de métal alcalin lors de la corrosion spontanée, en vue de contrôler la vitesse de corrosion du collecteur de courant et d'ordonner la structure de la couche d'halogénure de métal synthétisée.

L'utilisation d'un courant ou d'une tension appliqués au dispositif électrochimique à ion de métal alcalin lors de la corrosion spontanée contribue à augmenter la cinétique de la réaction de corrosion, et peut en outre contribuer à déposer l'halogénure préférentiellement suivant les lignes de champ au voisinage du collecteur de courant. Ceci permettrait d'aboutir à une électrode positive ayant de meilleures propriétés mécaniques et une structure plus régulière.

L'invention se rapporte également à un système électrochimique à ion de métal alcalin comprenant :
un dispositif électrochimique à ion de métal alcalin comprenant :
- un collecteur de courant d'électrode positive ;
- une électrode négative comprenant un métal alcalin ;
- une solution liquide apte à dissoudre un sel du métal alcalin inerte chimiquement par rapport au collecteur de courant d'électrode positive, et à conduire des ions du métal alcalin.

Il est aussi décrit que le système comprend en outre un précurseur d'ions halogénure destiné à être introduit dans la solution liquide, le précurseur d'ions halogénure étant apte à réagir par corrosion spontanée avec le collecteur de courant d'électrode positive.

Selon un mode de réalisation, le dispositif peut être agencé sous forme de batterie.

Selon un mode de réalisation, le dispositif peut en outre comprendre un séparateur imprégné de la solution liquide.

Cette séparation se présente généralement soit sous la forme d'une membrane poreuse polymérique, soit sous la forme d'une membrane fibreuse non tissée (par exemple en fibres de verre) ou d'une membrane composite (film polymérique avec dépôts de céramique), qui est dans tous les cas, imprégnée de l'électrolyte.

Selon un mode de réalisation, la solution liquide peut être un électrolyte liquide comprenant le sel du métal alcalin inerte chimiquement par rapport au collecteur de courant.

En utilisant l'électrolyte liquide inerte chimiquement par rapport au collecteur de courant pour dissoudre le précurseur d'ions halogénure, l'invention évite le recours à une solution liquide supplémentaire et simplifie encore davantage le procédé de corrosion spontanée permettant de former la couche d'halogénure de métal.

### DESCRIPTIF DES FIGURES

Le procédé objet de l'invention sera mieux compris à la lecture de la description qui suit d'exemples de réalisations présentés à titre illustratif, aucunement limitatifs, et à l'observation des dessins ci-après sur lesquels :
- la figure 1 est une représentation schématique d'un dispositif électrochimique en cours de fabrication dans lequel une couche de fluorure de métal est formée par corrosion spontanée;
- la figure 2 est une représentation schématique d'une électrode positive comprenant une couche de fluorure de métal obtenue par le procédé de la présente invention;
- la figure 3 est une représentation schématique d'un dispositif électrochimique pouvant servir à la formation d'une électrode positive par corrosion spontanée selon la présente invention ;
- la figure 4 est une photographie prise au microscope électronique à balayage (MEB) d'une couche de fluorure de fer obtenue selon un mode de réalisation de l'invention ;
- les figures 5a et 5b sont des diagrammes de Nyquist illustrant l'impédance d'une couche de fluorure de fer à différents stades de son procédé de synthèse pour un premier groupe de fréquences (basses) et pour un deuxième groupe de fréquences, plus hautes que celles du premier groupe de fréquences.

Pour des raisons de clarté, les dimensions des différents éléments représentés sur ces figures ne sont pas nécessairement en proportion avec leurs dimensions réelles. Sur les figures, des références identiques correspondent à des éléments identiques.

### DESCRIPTION DÉTAILLÉE

La présente invention propose un procédé pour fabriquer une électrode positive à base d'halogénure de métal qui est plus simple et moins couteux que les procédés de l'art antérieur. Le procédé de l'invention peut en outre être réalisé en une seule étape, directement dans un dispositif électrochimique à ion de métal alcalin déjà assemblé. Le dispositif électrochimique à ion de métal alcalin peut être par exemple une batterie primaire (pile non rechargeable) ou une batterie secondaire (rechargeable). À titre d'exemple, la présente description se rapporte à une électrode positive en fluorure de métal. Toutefois, d'autres halogénures peuvent également être envisagés. De même, le dispositif électrochimique à ion de métal alcalin décrit ci-après est une batterie lithium-ion, mais d'autres dispositifs peuvent être envisagés, par exemple des dispositifs utilisant la technologie sodium-ion.

Le procédé objet de la présente invention repose sur une réaction de corrosion spontanée d'un collecteur de courant comprenant un métal. Le collecteur de courant peut notamment être déjà installé dans un dispositif électrochimique lithium-ion lors de la fabrication par corrosion spontanée de l'électrode positive. La corrosion spontanée utilise pour ce faire un agent oxydant fluoré, par exemple LiPF₆, dont le pouvoir oxydant est supérieur au pouvoir oxydant du métal que comprend le collecteur de courant. La corrosion spontanée, dans le cas particulier d'un collecteur de courant en fer et d'un agent oxydant en LiPF₆, obéit à la réaction suivante :

3LiPF₆ + 2Fe → 2FeF₃ + 3LiF + 3PF₃ (réaction 1)

Le principal avantage de ce type de réaction par corrosion spontanée réside dans le fait qu'elle ne requiert aucun apport extérieur d'énergie, notamment sous forme électrique, pour être amorcée, et peut par conséquent se produire dès que les réactifs sont mis en présence.

Il convient de remarquer que les composés donnés ci-avant et ci-après ne sont fournis qu'à titre illustratif. Une réaction de corrosion spontanée peut être mise en œuvre avec d'autres collecteurs de métaux, comprenant un métal autre que le fer, à condition que le pouvoir oxydant de l'agent oxydant fluoré (aussi appelé précurseur d'ions fluorure) soit supérieur au pouvoir oxydant du métal du collecteur de courant.

Parmi les sels oxydants pouvant être envisagés dans des variantes d'utilisation il est possible de citer :
Le composé LiAsF₆, permettant d'obtenir du AsF3 par la réaction :

   LiAsF₆ + Fe → AsF3 (gaz)+ LiF + FeF2 (réaction 2)
Le composé LiSbF₆, permettant d'obtenir du SbF3 par la réaction:

   LiSbF₆ + Fe → SbF₃ (polymère)+ LiF + FeF₂ (réaction 3)

La réaction de corrosion spontanée exposée ci-dessus (réaction 1) produit du PF3 gazeux, et un résidu solide LiF, qui peut être intégré dans la couche de fluorure de fer produite.

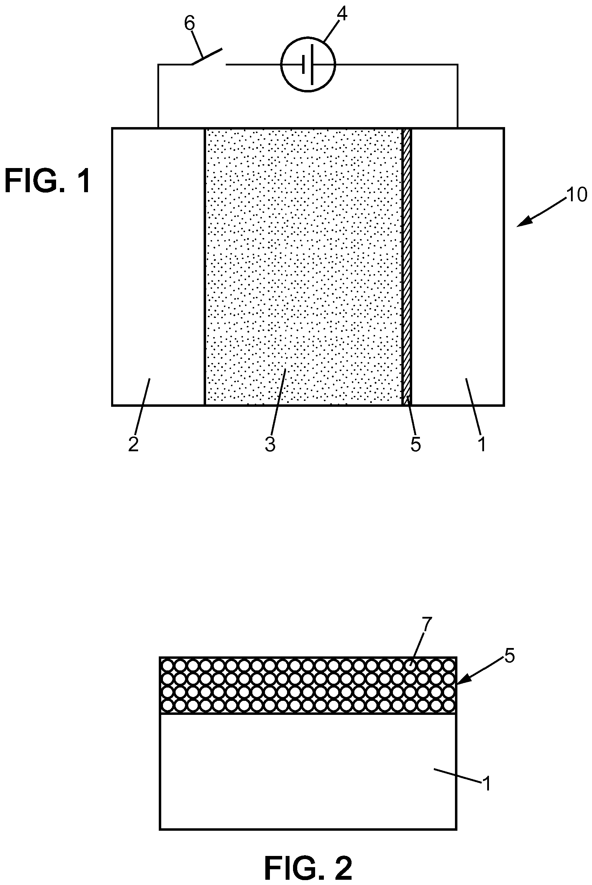

La figure 1 représente schématiquement un exemple de montage permettant de mettre en présence les réactifs d'une réaction par corrosion spontanée telle que celle fournie à titre d'exemple ci-avant. Ce montage comprend une batterie lithium-ion 10 comprenant un collecteur de courant 1, par exemple réalisé en un métal tel que le fer ou un alliage d'un métal, par exemple l'acier. La batterie 10 comprend en outre une contre-électrode formant une électrode négative 2 en lithium. L'espace entre les deux électrodes est séparé par une solution liquide 3 apte à dissoudre un précurseur d'ions fluorures formant un agent oxydant réagissant par corrosion spontanée avec le métal du collecteur de courant 1. La batterie 10 peut en outre comprendre une source d'énergie électrique 4 et un interrupteur 6. La position ouverte de l'interrupteur 6 de la figure 1 indique que la corrosion spontanée peut avoir lieu même en l'absence d'un apport extérieur d'énergie électrique.

La figure 2 illustre schématiquement une électrode positive issue du procédé de fabrication objet de la présente invention. Cette électrode comprend le collecteur de courant 1, et une couche 5 en halogénure de métal (l'halogénure étant en l'espèce du fluorure) solidaire du collecteur de courant 1. Cette couche 5 possède une structure poreuse constituée de pores 7, dont les dimensions peuvent typiquement être comprises entre 5 nm et 100 µm, et plus particulièrement entre 0.1 µm et 100 µm.

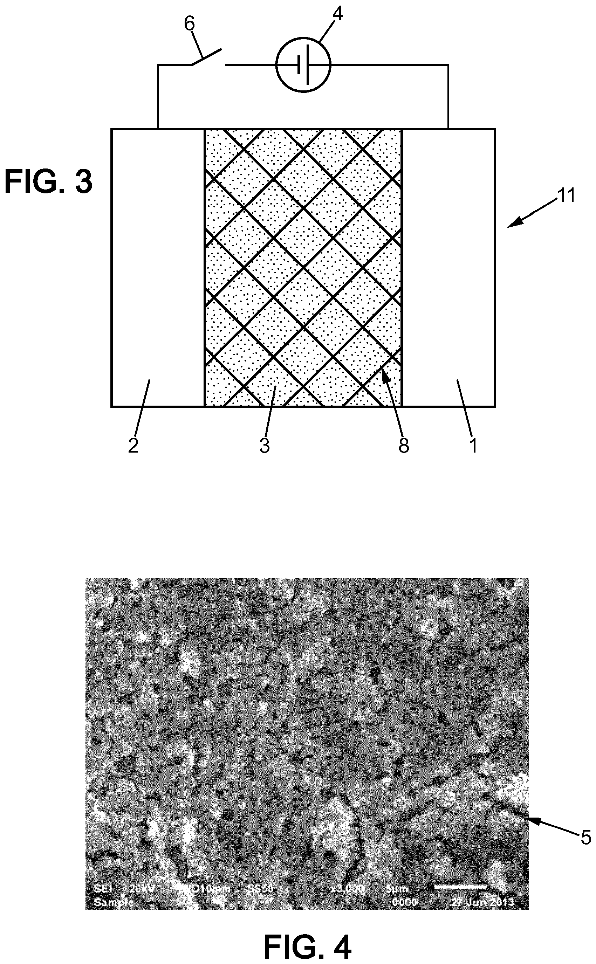

Un autre exemple de batterie 11 pouvant servir à la mise en œuvre du procédé de fabrication d'une électrode positive par corrosion spontanée est représenté sur la figure 3. Cette batterie 11 comprend en plus du collecteur de courant 1, de l'électrode négative 2 en lithium, de la source d'énergie électrique4 et de l'interrupteur 7, un séparateur 8 entre les deux électrodes. Ce séparateurs 8 peut typiquement être un film de polypropylène microporeux imprégné d'un électrolyte liquide, par exemple un électrolyte organique anhydre constitué d'un solvant ou d'un mélange de solvants tel que le EC :DEC 1 :1 couramment employé dans les batteries lithium-ion. D'autres solvants organiques, ou mélanges de solvants organiques, peuvent être envisagés, par exemple: carbonate de diéthyle, carbonate de propylène, carbonate de diméthyle. Le séparateur pourra également être un séparateur 8 en fibres de verre.

Le siège de la réaction de corrosion spontanée peut aussi être un accumulateur, ou un bain réactionnel si l'électrode positive est synthétisée avant d'être assemblée dans le dispositif électrochimique.

De préférence, la réaction de corrosion spontanée s'effectue en phase liquide, dans un solvant. Pour ce faire, le précurseur d'ions fluorures est dissout dans une solution liquide en contact avec le collecteur de courant 1. Dans le cas où le précurseur d'ions fluorures est le LiPF₆, il peut être dissout dans un électrolyte de batterie lithium-ion (comprenant par exemple un solvant EC : DEC 1:1).

Il est par exemple possible de synthétiser la couche 5 de fluorure de métal par immersion d'une feuille d'un métal tel que le fer (formant un collecteur de courant 1), dans une solution de 1 mol par litre de LiPF₆ dissout dans un solvant organique liquide anhydre (du fait notamment d'une instabilité du LiPF₆ dans l'eau), et de maintenir la feuille immergée dans cette solution suffisamment longtemps pour que la couche 5 de fluorure de métal acquière une épaisseur jugée suffisante. La corrosion spontanée est effectuée dans un environnement anhydre, par exemple dans le dispositif électrochimique déjà assemblé, ou bien encore dans une salle anhydre ou une boite à gant.

Il a été constaté qu'une réaction par corrosion spontanée aboutit à la formation d'une couche 5 de fluorure de métal d'épaisseur suffisante après 48 heures d'immersion. La couche 5 peut alors avoir une épaisseur pouvant aller de quelques nanomètres à 100 µm, et plus particulièrement être comprise entre 0,1 µm et 100 µm. Après 72 heures d'immersion, cette couche 5 masque totalement le collecteur de courant 1.

Il est également possible de contrôler l'épaisseur de la couche 5 obtenue par corrosion spontanée en dosant la quantité de précurseur d'ions halogénures (fluorure en l'espèce), qui est ajoutée. Le temps de synthèse de la couche 5 sera alors le temps nécessaire pour une réaction complète par corrosion spontanée de toute la quantité de précurseur d'ions halogénures ajoutée.

Un autre avantage du présent procédé est qu'il peut être utilisé dans un dispositif électrochimique déjà assemblé, juste avant sa première utilisation. En procédant ainsi, le précurseur d'ions fluorures se trouve en atmosphère anhydre. Dans ce cas, une économie de solvant pour dissoudre le précurseur d'ions fluorures peut être faite en utilisant en guise de solvant l'électrolyte du dispositif électrochimique lui-même. D'autre part, une formation de l'électrode positive juste avant une première utilisation permet de stocker le dispositif électrochimique lithium-ion sans électrolyte, sans risque d'auto-décharge (via l'électrolyte qui est alors absent avant la fabrication de l'électrode positive par corrosion). Finalement, le procédé de fabrication de l'invention permet d'utiliser des matériaux peu couteux pour le collecteur de courant (fer, acier par exemple), comparés aux matériaux intervenant dans des procédés d'art antérieur.

En guise d'exemple, l'électrolyte utilisé dans le dispositif électrochimique (et apte à dissoudre le précurseur d'ions fluorure) peut comprendre un solvant tel que le EC :DEC 1 :1 avec une concentration adaptée d'un sel de lithium dont l'anion n'est pas oxydant vis-à-vis du collecteur de courant 1. Le sel de lithium est donc inerte chimiquement vis-à-vis de ce collecteur de courant 1. Un composé tel que le LiBF4, utilisé comme source d'ions lithium dans l'électrolyte d'une batterie 10, 11 lithium-ion peut assurer la conduction ionique de l'électrolyte sans rentrer en compétition avec la réaction de corrosion spontanée du collecteur de courant amorcée par l'agent oxydant fluoré (correspondant au précurseur d'ions fluorures) dissout dans l'électrolyte. D'autres composés inertes chimiquement par rapport au collecteur de courant peuvent être choisis parmi le groupe constitué de LiCF₃SO₃, LiN(C₂F₅SO₂)₂, LiN(CF₃SO₂)₂ (LITFSI), LiC(SO₂CF₃)₃ (LiTf), LiBOB (Lithium Bis-Oxalate Borate de Lithium)

Puisque le LiBF4 ne participe pas à la corrosion spontanée du collecteur de courant 1, sa concentration ne varie pas significativement lors de la formation de la couche 5. Toutefois, la concentration du précurseur d'ions fluorure diminue à mesure que la réaction de corrosion spontanée progresse. Il convient ainsi d'ajouter une quantité suffisante de précurseurs d'ions fluorures pour obtenir l'épaisseur voulue pour la couche 5.

La vitesse de la réaction de corrosion spontanée ainsi que la qualité du dépôt de fluorure de fer obtenu sur le collecteur de courant 1 peut être contrôlée en appliquant un courant ou une tension entre le collecteur de courant 1 et la contre-électrode (électrode négative 2). Les ions fluorures ont alors tendance à se déposer plus vite, et préférentiellement le long des lignes de champ qui se forment au voisinage des électrodes, ce qui peut conduire à un dépôt plus régulier.

La figure 4 fournit une image prise par microscopie électronique à balayage (MEB) d'une couche 5 d'un fluorure de métal issue d'un procédé de corrosion spontanée selon la présente invention.

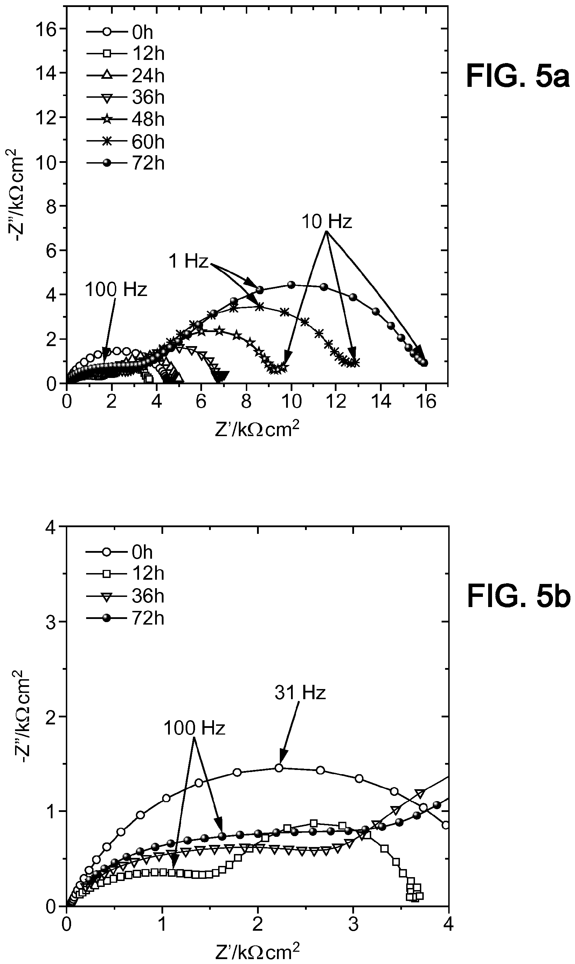

Les figures 5a et 5b illustrent des diagrammes de Nyquist représentant les résultats de mesures d'impédances effectuées sur une électrode positive à différents stades de la synthèse de la couche 5 de fluorure de métal qui la compose, lors d'une synthèse dans une batterie juste avant sa première utilisation. Le protocole expérimental permettant d'obtenir les diagrammes de Nyquist des figures 5a et 5b est identique à celui décrit dans l'article « On the growth of nanostructured iron hydroxy-fluorides for Li-ion batteries » de Guitiân B. et al. JOURNAL OF POWER SOURCES, vol. 241, (2013-05-12) pages 567-571. Ces diagrammes représentent la partie réelle de l'impédance en abscisse et la partie imaginaire de l'impédance en ordonnée. La figure 5a illustre une augmentation de l'impédance aux basses fréquences à mesure que la durée de la réaction de corrosion spontanée augmente. La figure 5b tend à confirmer cette tendance pour les hautes fréquences, et reflète l'influence, au cours de la synthèse de la couche 5 de fluorure de métal, de la réaction parallèle de formation d'une interface d'électrolyte solide au niveau de la contre-électrode de lithium (SEI pour « solid electrolyte interphase » selon la terminologie anglo-saxonne). Ce phénomène conduit à une baisse momentanée de l'impédance qui est ensuite inversée à nouveau une fois que la SEI est formée sur l'électrode négative 2.

En définitive, le procédé de la présente invention permet par une réaction simple, très peu couteuse et n'impliquant aucun apport supplémentaire d'énergie électrique, de fabriquer une électrode positive pour dispositif électrochimique lithium-ion, soit séparément, soit directement dans un dispositif électrochimique lithium-ion déjà assemblé. L'invention supprime ainsi le recours à des étapes successives complexes et couteuses pour fabriquer une électrode positive, et peut en outre bénéficier d'une synthèse in situ, ce qui protège la synthèse de tout polluant extérieur et évite le recours à un traitement thermique sous vide pour obtenir une atmosphère contrôlée. La qualité de la couche 5 ainsi obtenue permet d'obtenir des performances satisfaisantes dans le dispositif électrochimique équipé de l'électrode ainsi fabriquée.

## Revendications

1. Procédé de fabrication d'une électrode positive destinée à être utilisée dans un dispositif électrochimique à ion de métal alcalin, comprenant :
- synthétiser une couche (5) d'un halogénure de métal par traitement électrochimique d'un collecteur de courant (1);
le procédé étant **caractérisé en ce que** le traitement électrochimique est une corrosion spontanée du collecteur de courant,
la corrosion spontanée étant effectuée dans le dispositif électrochimique à ion de métal alcalin une fois ledit dispositif électrochimique à ion de métal alcalin assemblé,
- dissoudre un précurseur d'ions halogénure dans une solution liquide (3) en contact avec le collecteur de courant,
la solution liquide étant un solvant organique ou un électrolyte liquide du dispositif électrochimique à ion de métal alcalin comprenant un sel du métal alcalin inerte chimiquement par rapport au collecteur de courant et assurant la conduction ionique de l'électrolyte,
le précurseur d'ions halogénure étant apte à réagir par corrosion spontanée avec le collecteur de courant d'électrode positive.

2. Procédé selon la revendication 1, dans lequel le sel du métal alcalin inerte chimiquement par rapport au collecteur de courant est choisi parmi le groupe constitué de : LiBF₄, LiCF₃SO₃, LiN(C₂F₅SO₂)₂, LiN(CF₃SO₂)₂ (LITFSI), LiC(SO₂CF₃)₃ (LiTf), LiBOB (Lithium Bis-Oxalate Borate de Lithium), NaN(CF₃SO₂)₂,(NaTFSI).

3. Procédé selon l'une quelconque des revendications 1 ou 2, dans lequel le précurseur d'ions halogénure est un sel choisi parmi le groupe constitué de : LiPF₆, NaPF₆, LiAsF₆, LiSbF₆.

4. Procédé selon l'une quelconque des revendications 1 à 3, dans lequel le collecteur de courant comprend du fer, pur ou intégré à un alliage, en contact avec la solution liquide.

5. Procédé selon l'une quelconque des revendications 1 à 4, comprenant en outre :
- effectuer la corrosion spontanée du collecteur de courant pendant au moins 48 heures, la concentration en précurseur d'ions halogénure étant comprise entre 1 mmol/L et 1 mol/L dans la solution liquide.

6. Procédé selon l'une quelconque des revendications 1 à 5, comprenant en outre :
- appliquer un courant ou une tension au dispositif électrochimique à ion de métal alcalin lors de la corrosion spontanée, en vue de contrôler la vitesse de corrosion du collecteur de courant et d'ordonner la structure de la couche d'halogénure de métal synthétisée.

7. Système électrochimique à ion de métal alcalin comprenant un dispositif électrochimique à ion de métal alcalin, ledit dispositif comprenant :
- un collecteur de courant (1) d'électrode positive ;
- une électrode négative (2) comprenant du métal alcalin ;
- une solution liquide (3) comprenant un sel du métal alcalin inerte chimiquement par rapport au collecteur de courant d'électrode positive, et apte à conduire des ions du métal alcalin ;
ledit collecteur de courant d'électrode positive comprenant une couche d'halogénure de métal obtenue par corrosion spontanée avec un précurseur d'ions halogénure dissous dans ladite solution liquide.

8. Système selon la revendication 7, dans lequel le dispositif est agencé sous forme de batterie (10, 11).

9. Système selon l'une quelconque des revendications 7 à 8, dans lequel le dispositif comprend en outre un séparateur (8) imprégné de la solution liquide.

10. Système selon l'une quelconque des revendications 7 à 9, dans lequel la solution liquide est un électrolyte liquide comprenant le sel du métal alcalin inerte chimiquement par rapport au collecteur de courant.

## Patentansprüche

1. Verfahren zur Herstellung einer positiven Elektrode, die vorgesehen ist zur Verwendung in einer elektrochemischen Vorrichtung mit Alkalimetallionen, umfassend:
- Synthetisieren einer Schicht (5) aus einem Metallhalogenid durch elektrochemische Behandlung eines Stromkollektors (1);
wobei das Verfahren **dadurch gekennzeichnet ist, dass** die elektrochemische Behandlung eine spontane Korrosion des Stromkollektors ist,
wobei die spontane Korrosion in der elektrochemischen Vorrichtung mit Alkalimetallionen nach dem Aufbau der elektrochemischen Vorrichtung mit Alkalimetallionen erfolgt,
- Auflösen eines Halogenidionen-Vorläufers in einer flüssigen Lösung (3), die in Kontakt mit dem Stromkollektor ist,
wobei die flüssige Lösung ein organisches Lösungsmittel oder ein flüssiger Elektrolyt der elektrochemischen Vorrichtung mit Alkalimetallionen ist, umfassend ein Alkalimetallsalz, das gegenüber dem Stromkollektor chemisch inert ist und die Ionenleitung des Elektrolyten gewährleistet,
wobei der Halogenidionenvorläufer zu einer spontanen Korrosionsreaktion mit dem positiven Elektrode-Stromkollektor der positiven Elektrode geeignet ist.

2. Verfahren nach Anspruch 1, worin das Alkalimetallsalz, das gegenüber dem Stromkollektor chemisch inert ist, ausgewählt ist aus der Gruppe bestehend aus: LiBF₄, LiCF₃SO₃, LiN(C₂F₅SO₂)₂, LiN(CF₃SO₂)₂ (LITFSI), LiC(SO₂CF₃)₃ (LiTf), LiBOB (Lithium-bis-Oxalat - Lithiumborat), NaN(CF₃SO₂)₂,(NaTFSI).

3. Verfahren nach einem der Ansprüche 1 oder 2, worin der Halogenidionenvorläufer ein Salz ist, das ausgewählt ist aus der Gruppe bestehend aus: LiPF₆, NaPF₆, LiAsF₆, LiSbF₆.

4. Verfahren nach einem der Ansprüche 1 bis 3, worin der Stromabkollektor reines oder legiertes Eisen enthält, das mit der flüssigen Lösung in Kontakt steht.

5. Verfahren nach einem der Ansprüche 1 bis 4, weiterhin umfassend:
Durchführen der Spontankorrosion des Stromkollektor während mindestens 48 Stunden, wobei die Konzentration des Halogenidionenvorläufers zwischen 1 mmol/l und 1 mol/l in der flüssigen Lösung liegt.

6. Verfahren nach einem der Ansprüche 1 bis 5, weiterhin umfassend:
- Anlegen eines Stroms oder einer Spannung an die elektrochemische Vorrichtung mit Alkalimetallionen während der Spontankorrosion, um die Korrosionsgeschwindigkeit des Stromkollektors zu steuern und die Struktur der synthetisierten Metallhalogenidschicht zu ordnen.

7. Elektrochemisches System mit Alkalimetallionen, umfassend eine elektrochemische Vorrichtung mit Alkalimetallionen, wobei die Vorrichtung Folgendes umfasst:
- einen positive Elektrode-Stromkollektor (1);
- eine negative Elektrode (2), die Alkalimetall enthält;
- eine flüssige Lösung (3), die ein Alkalimetallsalz enthält, das gegenüber dem positive Elektrode-Stromkollektor chemisch inert ist und Alkalimetallionen leiten kann;
wobei der positive Elektrode-Stromkollektor eine Metallhalogenidschicht umfasst, die durch spontane Korrosion mit einem in der flüssigen Lösung gelösten Halogenidionenvorläufer erhalten wird.

8. System nach Anspruch 7, worin die Vorrichtung als Batterie (10, 11) aufgebaut ist.

9. System nach einem der Ansprüche 7 bis 8, worin die Vorrichtung weiterhin einen mit der flüssigen Lösung imprägnierten Separator (8) umfasst.

10. System nach einem der Ansprüche 7 bis 9, worin die flüssige Lösung ein flüssiger Elektrolyt ist, der das Alkalimetallsalz enthält, das gegenüber dem Stromkollektor chemisch inert ist.

## Claims

1. A method for the production of a positive electrode intended for use in an alkali metal-ion electrochemical device, comprising:
- synthesising a layer (5) of a metal halide involving the electrochemical treatment of a current collector (1);
the method being **characterised in that** the electrochemical treatment is a spontaneous corrosion of the current collector,
the spontaneous corrosion being carried out in the alkali metal-ion electrochemical device once said alkali metal-ion electrochemical device is assembled,
- dissolving a halide ion precursor in a liquid solution (3) in contact with the current collector,
the liquid solution being an organic solvent or a liquid electrolyte of the alkali metal-ion electrochemical device comprising a salt of the alkali metal which is chemically inert with respect to the current collector and ensuring the ionic conduction of the electrolyte,
the halide ion precursor being capable of reacting by spontaneous corrosion with the positive electrode current collector.

2. The method according to claim 1, wherein the salt of the alkali metal which is chemically inert with respect to the current collector is selected from the group consisting of: LiBF₄, LiCF₃SO₃, LiN(C₂F₅SO₂)₂, LiN(CF₃SO₂)₂ (LITFSI), LiC(SO₂CF₃)₃ (LiTf), LiBOB (Lithium Bis-Oxalate Borate), NaN(CF₃SO₂)₂, (NaTFSI).

3. The method according to any one of claims 1 or 2, wherein the halide ion precursor is a salt selected from the group consisting of: LiPF₆, NaPF₆, LiAsF₆, LiSbF₆.

4. The method according to any one of claims 1 to 3, wherein the current collector comprises iron, which is pure or integrated with an alloy, in contact with the liquid solution.

5. The method according to any one of claims 1 to 4, further comprising:
- performing spontaneous corrosion of the current collector for at least 48 hours, the concentration of halide ion precursor being comprised between 1 mmol/L and 1 mol/L in the liquid solution.

6. The method according to any one of claims 1 to 5, further comprising:
- applying a current or voltage to the alkali metal-ion electrochemical device during spontaneous corrosion, in order to control the corrosion rate of the current collector and to arrange the structure of the synthesised metal halide layer.

7. An alkali metal-ion electrochemical system comprising
an alkali metal-ion electrochemical device, said device comprising:
- a positive electrode current collector (1);
- a negative electrode (2) comprising alkali metal;
- a liquid solution (3) comprising a salt of the alkali metal which is chemically inert with respect to the positive electrode current collector, and capable of conducting ions of the alkali metal;
said positive electrode current collector comprising a metal halide layer obtained by spontaneous corrosion with a halide ion precursor dissolved in said liquid solution.

8. The system according to claim 7, wherein the device is arranged in the form of a battery (10, 11).

9. The system according to any one of claims 7 to 8, wherein the device further comprises a separator (8) impregnated with the liquid solution.

10. The system according to any one of claims 7 to 9, wherein the liquid solution is a liquid electrolyte comprising the salt of the alkali metal which is chemically inert with respect to the current collector.
